(19) Europäisches Patentamt
European Patent Office
Office européen des brevets

(11) Publication number: **0 503 175 A1**

(12) **EUROPEAN PATENT APPLICATION**

(21) Application number: **91302004.6**

(51) Int. Cl.5: **A01N 43/80**, A01N 37/34

(22) Date of filing: **11.03.91**

(43) Date of publication of application:
**16.09.92 Bulletin 92/38**

(84) Designated Contracting States:
**DE FR GB**

(71) Applicant: **SOMAR CORPORATION**
**11-2, Ginza 4-chome Chuo-ku**
**Tokyo 104(JP)**

(72) Inventor: **Funatsu, Ryoji**
**Azusaen 203, 3-13-7 Nishiarai**
**Adachi-ku, Tokyo(JP)**
Inventor: **Mitsui, Susumu**
**Charme-Kitakoshigaya B-303, 1006-3 Ofusa**
**Koshigaya-shi, Saitama-ken(JP)**

(74) Representative: **Allam, Peter Clerk et al**
**LLOYD WISE, TREGEAR & CO. Norman**
**House 105-109 Strand**
**London WC2R 0AE(GB)**

(54) **Germicidal composition.**

(57) A stabilized germicidal composition in the form of a solution is disclosed which includes a mixed solvent consisting of water and a water-soluble glycol compound having the following general formula:

$$HO-(X)-(O-X)_n-O-Y$$

wherein X stands for a divalent alkyl group, n is an integer of 0 or more and Y stands for a hydrogen atom, an alkyl group or an acyl group, the weight ratio of the glycol compound to the water being in the range of 95:5 to 20:80; 1-30 % by weight of an isothiazolone compound; and 1-40 % by weight of dibromonitrilepropionamide.

EP 0 503 175 A1

This invention relates generally to a germicide suitable for preventing growth of various germs such as yeasts and filamentous fungi in industrial water such as waste water from pulp mills or cooling water for heat exchangers and, more specifically, to a germicidal composition of the above-mentioned type which is stable and has an improved shelf life.

In industrial water such as waste water from paper making steps in pulp-related industries and recirculating cooling water used in various mills, microorganisms such as germs, fungi and bacteria are apt to grow to form slimes which cause various problems. Thus, it is a general practice to incorporate a germicide in such industrial water.

Various germicides have been proposed and some of them are actually used for destroying germs or preventing growth of germs in various fields. Among various germicides, an isothiazolone compound (hereinafter referred to as ITZ) is known to be especially effective in preventing the occurrence of slimes. It is also known that conjoint use of ITZ and a dibromonitrilopropionamide (hereinafter referred to as NPA) gives excellent synergetic effect. Isothiazolone-type germicides are thus utilized not only as a slime-preventive agent but also as a germ-destroying agent for aqueous paints, machining oils and adhesives.

ITZ-containing germicides, however, have a problem that ITZ is not stable and, therefore, the germicidal activity of such germicides is gradually degraded when stored for a long period of time. It is known that ITZ is more stable in a glycol than in other solvents such as ketones and ethers. However, such a glycol solution of ITZ is still unstable. For example, non-aqueous solutions containing about 15 % of ITZ in dipropylene glycol completely decomposes in 28 days at 50 °C (U. S. patent No. 3,870,795). If water is incorporated in such a glycol solution, ITZ becomes more unstable and decomposes in much earlier days. NPA is not stable, either. A glycol is known to be a relatively better solvent for NPA than other organic solvents. In an aqueous glycol solution, NPA becomes poorer in stability as compared with in non-aqueous glycol solutions.

The present invention has been made with the above problem of the conventional germicides in view and is contemplated to provide an ITZ-NPA-type germicide having an improved shelf life. In accordance with the present invention there is provided a composition in the form of a solution, comprising:

a mixed solvent consisting of water and a water-soluble glycol compound having the following general formula:

$$HO-(X)-(O-X)_n-O-Y$$

wherein X stands for a divalent alkyl group, n is an integer of 0 or more and Y stands for a hydrogen atom, an alkyl group or an acyl group, wherein the weight ratio of said glycol compound to said water is in the range of 95:5 to 20:80;

1-30 % by weight of an isothiazolone compound dissolved in said mixed solvent; and

1-40 % by weight of dibromonitrilopropionamide dissolved in said mixed solvent, wherein the weight ratio of said isothiazolone compound to said dibromonitrilopropionamide is in the range of 1:10 to 10:1.

It has been found that when a mixture of a glycol compound and water is used as a solvent for ITZ and NPA, both compounds can be stabilized in the resulting solution. This is very surprising since the presence of water in a glycol compound solvent adversely affects the stability of ITZ and NPA if they are used by themselves.

The present invention will now be described in detail below.

Any isothiazolone compound may be used for the purpose of the present invention as long as it has a germicidal activity. If desired, a mixture of two or more isothiazolone compounds may be used. Particularly suited are 3-isothiazolone compounds represented by the following general formula:

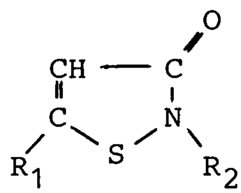

wherein $R_1$ stands for hydrogen or halogen and $R_2$ stands for hydrogen or alkyl. Illustrative of suitable isothiazolone compounds are 2-methyl-3-isothiazolone, 5-chloro-2-methyl-3-isothiazolone, 2-octyl-3-isothiazolone, 2-ethyl-3-isothiazolone and mixtures thereof. Complexes of isothiazolones, such as calcium

chloride complexes, magnesium nitrate complexes and iron chloride complexes, may also be used, though the use of free form isothiazolones is preferred.

NPA to be used in conjunction with ITZ has the following chemical formula:

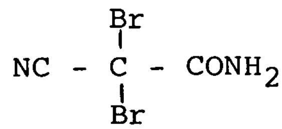

The present invention is characterized by using a a mixed solvent consisting of water and a water-soluble glycol compound having the following general formula:

$$HO\!-\!\!(\,X\,)\!-\!\!(\,O - X\,)_n\,O - Y$$

wherein X stands for a divalent alkyl group, n is an integer of 0 or more and Y stands for a hydrogen atom, an alkyl group or an acyl group for obtaining a solution of ITZ and NPA. Examples of the divalent alkyl group represented by the symbol X are alkylenes such as ethylene, propylene and butylene. The integer "n" is not specifically limited as long as it gives a water-soluble glycol compound but is generally less than 10. The acyl group represented by the symbol Y is preferably -CO-R in which R is an alkyl, more preferably a lower alkyl.

Illustrative of suitable glycol compounds are glycols such as ethylene glycol, diethylene glycol, triethylene glycol, polyethylene glycol (molecular weight of less than about 600), propylene glycol, dipropylene glycol, polypropylene glycol (molecular weight of less than about 800), monoalkyl ethers of the above glycols and monoalkyl esters of the above glycols.

The weight ratio of the glycol compound and the water in the mixed solvent is in the range of 95:5 to 20:80, preferably in the range of 80:20 to 50:50 to provide satisfactory stability of ITZ and NPA. The mixed solvent is used in such an amount that the concentrations of ITZ and NPA in the solution are 1-30 % by weight and 1-40 % by weight, respectively, preferably 4-20 % by weight and 4-30 % by weight, respectively.

Solutions of ITZ and NPA in the above mixed solvent are excellent in stability and ITZ and NPA may be prevented from decomposing for a long period of time. Thus, degradation of germicidal activity during storage or transportation is effectively prevented.

The following examples will further illustrate the present invention.

Examples 1-15

One or more of ITZs shown in Table 1 were dissolved in the mixed solvents shown in Table 1 together with NPA. The amounts (parts by weight) of ITZs, NPA, glycol compounds and water are also shown in Table 1. In Table 1, the abbreviations are as follows:

Isothiazolone Compound:

ITZ-1: 5-Chloro-2-methylisothiazolone
ITZ-2: 2-Methylisothiazolone
ITZ-3: 2-Octylisothiazolone

Glycol Compound:

EG: Ethylene glycol
DEG: Diethylene glycol
PG: Propylene glycol
DGME: Diethylene glycol monomethyl ether
DPG: Dipropylene glycol
PEG: Polyethylene glycol (molecular weight: 400)

The thus prepared solutions were then allowed to stand at 40 °C for 30 days. The concentrations (C) of ITZs and NPA in each solution was measured by liquid chromatography 5, 10, 20 and 30 days after the

preparation thereof to evaluate the stability thereof in terms of "survival rate (SR)" calculated from the following equation:

$$\text{Survival rate} = \frac{C}{C_0} \times 100\ \%$$

wherein C represents the measured concentration and $C_0$ represents the initial concentration. The results are also shown in Table 1.

Comparative Examples 1-13

The procedures of the above Examples 1-13 were repeated in the same manner as described except that the amounts of the glycol compounds and water were changed as shown in Table 2. The results are also summarized in Table 2. In Comparative Examples 4-6, the germicidal ingredients were not able to be dissolved in water (indicated as * in Table 2).

Table 1

| Example No. | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| ITZ-1 | 20 | | | 20 | | | 15 | 15 | 15 | 15 | 15 | 15 | 7 | 7 | 7 |
| ITZ-2 | | 20 | | | 20 | | 5 | 5 | 5 | 5 | 5 | 5 | 3 | 3 | 3 |
| ITZ-3 | | | 20 | | | 20 | | | | | | | | | |
| NPA | 10 | 10 | 10 | 10 | 10 | 10 | 10 | 10 | 10 | 10 | 10 | 10 | 20 | 20 | 20 |
| Water | 20 | 20 | 20 | 35 | 35 | 35 | 20 | 20 | 20 | 20 | 20 | 20 | 20 | 35 | 20 |
| EG | 50 | | | 35 | | | 50 | | | | | | 50 | 35 | |
| DEG | | 50 | | | 35 | | | 50 | | | | | | | |
| PG | | | 50 | | | 35 | | | 50 | | | | | | 50 |
| DGME | | | | | | | | | | 50 | | | | | |
| DPG | | | | | | | | | | | 50 | | | | |
| PEG | | | | | | | | | | | | 50 | | | |
| SR (%) | | | | | | | | | | | | | | | |
| ITZs | | | | | | | | | | | | | | | |
| 5 days | 100 | 100 | 100 | 100 | 100 | 100 | 100 | 100 | 100 | 100 | 100 | 100 | 100 | 100 | 100 |
| 10 days | 100 | 100 | 100 | 100 | 100 | 100 | 100 | 100 | 100 | 100 | 100 | 100 | 100 | 100 | 100 |
| 20 days | 100 | 100 | 100 | 100 | 98 | 98 | 100 | 100 | 98 | 96 | 100 | 96 | 100 | 100 | 100 |
| 30 days | 100 | 100 | 100 | 100 | 97 | 96 | 100 | 100 | 96 | 91 | 99 | 94 | 100 | 100 | 98 |
| NPA | | | | | | | | | | | | | | | |
| 5 days | 100 | 100 | 100 | 100 | 100 | 100 | 100 | 100 | 100 | 100 | 100 | 100 | 100 | 100 | 100 |
| 10 days | 100 | 100 | 100 | 100 | 100 | 100 | 100 | 100 | 100 | 100 | 100 | 100 | 100 | 100 | 100 |
| 20 days | 100 | 100 | 100 | 98 | 95 | 94 | 100 | 100 | 98 | 96 | 99 | 96 | 100 | 100 | 100 |
| 30 days | 100 | 100 | 100 | 96 | 92 | 93 | 100 | 100 | 96 | 94 | 97 | 94 | 100 | 98 | 97 |

Table 2

| Comp. Ex. No. | 1 | 2 | 3 | 4 | 5 | 6 | 7 | 8 | 9 | 10 | 11 | 12 | 13 |
|---|---|---|---|---|---|---|---|---|---|---|---|---|---|
| ITZ-1 | 20 | | | 20 | | | 15 | 15 | 15 | 15 | 15 | 15 | 7 |
| ITZ-2 | | 20 | | | 20 | | 5 | 5 | 5 | 5 | 5 | 5 | 3 |
| ITZ-3 | | | 20 | | | 20 | | | | | | | |
| NPA | 10 | 10 | 10 | 10 | 10 | 10 | 10 | 10 | 10 | 10 | 10 | 10 | 20 |
| Water | | | | 70 | 70 | 70 | | | | | | | 70 |
| EG | 70 | | | | | | 70 | | | | | | |
| DEG | | 70 | | | | | | 70 | | | | | |
| PG | | | 70 | | | | | | 70 | | | | |
| DGME | | | | | | | | | | 70 | | | |
| DPG | | | | | | | | | | | 70 | | |
| PEG | | | | | | | | | | | | 70 | |
| SR (%) | | | | | | | | | | | | | |
| ITZs | | | | | | | | | | | | | |
| 5 days | 86 | 99 | 100 | * | * | * | 85 | 50 | 63 | 98 | 96 | 100 | 82 |
| 10 days | 75 | 88 | 96 | * | * | * | 80 | 10 | 24 | 46 | 86 | 76 | 68 |
| 20 days | 69 | 42 | 50 | * | * | * | 52 | 5 | 10 | 20 | 45 | 28 | 38 |
| 30 days | 25 | 5 | 5 | * | * | * | 9 | 0 | 0 | 6 | 16 | 9 | 20 |
| NPA | | | | | | | | | | | | | |
| 5 days | 98 | 99 | 100 | * | * | * | 92 | 95 | 90 | 89 | 96 | 92 | 98 |
| 10 days | 86 | 83 | 96 | * | * | * | 80 | 78 | 78 | 65 | 86 | 78 | 87 |
| 20 days | 57 | 56 | 61 | * | * | * | 62 | 64 | 59 | 48 | 68 | 54 | 60 |
| 30 days | 32 | 42 | 35 | * | * | * | 51 | 48 | 41 | 32 | 42 | 38 | 39 |

## Claims

**1.** A composition comprising:

a mixed solvent consisting of water and a water-soluble glycol compound having the following general formula:

$$HO-(X)-(O-X)_{n}-O-Y$$

wherein X stands for a divalent alkyl group, n is an integer of 0 or more and Y stands for a hydrogen atom, an alkyl group or an acyl group, wherein the weight ratio of said glycol compound to said water is in the range of 95:5 to 20:80;

1-30 % by weight of an isothiazolone compound dissolved in said mixed solvent; and

1-40 % by weight of dibromonitrilopropionamide dissolved in said mixed solvent, wherein the weight ratio of said isothiazolone compound to said dibromonitrilopropionamide is in the range of 1:10 to 10:1.

**2.** A composition according to claim 1, wherein said isothiazolone compound and said dibromonitrilepropionamide are present in amounts of 4-20 % by weight and 4-30 % by weight, respectively and wherein the weight ratio of said isothiazolone compound to said dibromonitrilopropionamide is in the range of 1:5 to 5:1.

**3.** A composition according to claim 1, wherein said isothiazolone compound is at least one compound selected from those represented by the following general formula:

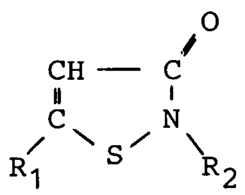

wherein $R_1$ stands for hydrogen or halogen and $R_2$ stands for hydrogen or alkyl, and complexes thereof.

European Patent Office

# EUROPEAN SEARCH REPORT

Application Number

EP 91 30 2004

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 398 795 (KATAYAMA CHEMICAL INC.)<br>* page 3, line 10 - page 3, line 33 *<br>* page 4, line 57 *<br>* page 5, line 5 - page 5, line 16; claims; examples *<br>--- | 1-3 | A01N43/80<br>A01N37/34 |
| X | CHEMICAL ABSTRACTS, vol. 107, no. 11, 14 September 1987, Columbus, Ohio, US; abstract no. 91899S, K.OKAMOTO: 'microbicides containing isothiazolone derivatives, 2,2-dibromo-3-nitrilopropionamide and/or hexachlorodimethylsulfone'<br>page 273 ;<br>* abstract *<br>& JP-A-6 270 301 (TAKEDA CHEMICAL INDUSTRIES LTD )<br>--- | 1-3 | |
| A | EP-A-0 166 611 (ROHM & HAAS COMPANY)<br>--- | | |
| A | DE-A-3 306 956 (BROMINE COMPOUNDS LTD)<br>----- | | TECHNICAL FIELDS SEARCHED (Int. Cl.5 )<br>A01N |

The present search report has been drawn up for all claims

| Place of search | Date of completion of the search | Examiner |
|---|---|---|
| THE HAGUE | 07 NOVEMBER 1991 | DONOVAN T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)